# EUROPÄISCHE PATENTSCHRIFT

(11) **EP 0 937 568 B1**
(45) Veröffentlichungstag und Bekanntmachung des Hinweises auf die Patenterteilung: **22.08.2001**
(21) Anmeldenummer: 99110834.1
(22) Anmeldetag: 25.09.1996
(51) Int. Cl.: B29C 47/16

(54) **Vorrichtung zur veränderlichen Begrenzung eines flachen Fliesskanals und Verfahren zum Austragen einer Massebahn mit veränderlicher Geometrie**
Apparatus for the variable limitation of a flat flowchannel and method for extruding a sheet having variable geometry
Dispositif de délimitation variable d'un canal d'écoulement plat et procédé d'extraction d'une bande de matière a géometrie variable

(30) Priorität: 27.09.1995 DE 19535930
(43) Veröffentlichungstag der Anmeldung: 25.08.1999
(62) Teilanmeldung aus: 96933383.0
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Rau, Albrecht

(56) Entgegenhaltungen:
- DE-A- 2 634 124
- DE-A- 4 020 728
- DE-U- 9 408 463
- US-A- 3 850 568

## Beschreibung

Die Erfindung betrifft eine Vorrichtung gemäß dem Oberbegriff des Anspruchs 1 sowie ein Verfahren gemäß dem Oberbegriff des Anspruchs 4.

Aus der DE 40 20 728 A1 ist ein Kalibrieraggregat für eine Strangpreßvorrichtung bekannt, wobei eine Kanalwand durch Stellmittel über ihre gesamte Breite verstellbar ist. Nicht bekannt sind voneinander unabhängige Stellmittel, die auf die gesamte Wand bzw. einen lokal begrenzten Teil einwirken.

Vorrichtungen, wie oben beschrieben, sind in vielfältiger Form bekannt. Sie werden speziell im Bereich der Kunststoffverarbeitung in Fließkanälen für Thermoplastschmelzen eingesetzt, um den Fließkanalwiderstand verändern zu können. In EP 0 367 022, DE 35 30 383 A1, DE 44 00 069 C1 und DE-AS 12 31 412 werden Extrusionsdüsen beschrieben, bei denen die Rießkanalhöhe verändert werden kann. Diese bekannten Lösungen bestehen aus einer mehr oder minder dicken, massiven, einstückigen, metallischen Wand, die über Stellmittel, die von der Rückseite auf die Wand drücken, deformiert werden kann. Sie funktionieren nur solange, wie die massive Wand bei der Deformation den linear elastischen Deformationsbereich nicht überschreitet, da sie darauf angewiesen sind, daß die Wand beim Rückstellen der Stellmittel wieder exakt in die ursprüngliche Ausgangslage zurückkehrt. Wegen der bei diesen Vorrichtungen aus Festigkeitsgründen notwendigen relativ dicken Wand sind sowohl der gleichmäßigen Verstellung der Wand über der gesamten Breite des Fließkanals (Gesamtverstellung) als auch der lokal auf einen kleinen Wandbereich begrenzten Verstellung (Relativverstellung) enge Grenzen gesetzt.

In DE-OS 23 05 877 wird eine Fließkanalbegrenzung beschrieben, die sich aus mehreren dünnen, flächig aufeinanderliegenden Einzelblechen zusammensetzt und damit eine größere Flexibilität aufweist. Die Flexibilität wird jedoch damit erkauft, daß bei dieser Lösung das wichtige Kriterium der absoluten Dichtigkeit gegenüber dem im Fließkanal strömenden Fluid nicht erfüllt wird, da für die Verstellung eine Beweglichkeit aller Einzelbleche in den Randbereichen erforderlich ist. Die Bleche ragen dazu in ihren Randbereichen in Nuten hinein, die sich zwischen den beiden Hälften des Fließkanalkörpers befinden. Die für eine Abdichtung in diesen Randbereichen notwendige Flächenpressung kann damit nicht aufgebracht werden, da sie keine Relativbewegung zwischen den Blechen und den Fließkanalhälften mehr zulassen würde.

Lösungen mit einem großen Verstellbereich bei gleichzeitiger absoluter Dichtigkeit des Fließkanals sind demnach mit den bekannten Vorrichtungen der gattungsgemäßen Art nicht vorbeschrieben. Auch bieten die bekannten Vorrichtungen ebensowenig die Möglichkeit ein Verfahren durchzuführen, bei dem ein Massestrang durch einen absolut dichten Werkzeugkanal gepreßt wird, wobei mittels zweier im Werkzeug integrierter unabhängiger Stellsysteme, die auf eine Fließkanalwand einwirken, die Dicke der Massebahn während des Masseaustrags entweder in Ihrer Gesamtheit oder nur lokal an bestimmten Stellen oder aber beides gleichzeitig verändert werden kann, oder bei dem die Breite der Massebahn während des Austrags durch Veränderung der Geometrie des Fließkanals im Werkzeug geändert werden kann.

Da derartige Vorrichtungen, um einen Fließkanal mit einem großen Stellweg mittels zweier auf eine Fließkanalwand arbeitender unabhängiger Stellmittel gleichzeitig sowohl in seiner Gesamthöhe als auch nur bereichsweise in seiner Höhe zu verstellen, bisher nicht zur Verfügung standen, sind bis jetzt auch keine Verfahren bekannt, mit denen eine Massebahn während ihres Austrags in dieser Weise verändert werden kann.

Der Erfindung liegt daher die Aufgabe zugrunde, einerseits eine Vorrichtung der gattungsgemäßen Art so auszugestalten, daß vergrößerte Gesamt- und Relativverstellbereiche der Vorrichtung möglich sind, andererseits darauf aufbauend Verfahren zu entwickeln, mit denen eine Massebahn während ihres Austrags gleichzeitig in ihrer Gesamtdicke und bereichsweise in ihrer lokalen Dicke sowie in ihrer Breite verändert werden kann.

Diese Aufgabe wird einerseits erfindungsgemäß durch die Merkmale des kennzeichnenden Teils des Anspruchs 1 gelöst Andererseits wird sie durch die Merkmale des kennzeichnenden Teils des Anspruchs 4 gelöst.

Besonders vorteilhaft kann es sein, wenn nach Anspruch zwei unabhängige Stellmittel auf eine flexible.-Wand der Vorrichtung einwirken, wobei mittels der ersten Stellmittel eine gleichmäßige Verstellung der Wand über der gesamten Breite vorgenommen werden kann, und mittels der zweiten Stellmittel die Wand zusätzlich über der Breite lokal begrenzt deformiert werden kann. Eine maximale Verstellung erreicht man, wenn man nach Anspruch 2 auf zwei Wände des Fließkanals jeweils zwei unabhängige Stellmittel einwirken läßt, wobei mittels der ersten Stellmittel eine gleichmäßige Verstellung der jeweiligen Wand über der gesamten Breite vorgenommen werden kann, und mittels der zweiten Stellmittel die jeweilige Wand zusätzlich über der Breite lokal begrenzt deformiert werden kann. Die kraftschlüssige Anbindung nach Anspruch3 vergrößert den Stellbereich nochmals, da damit die Wand nicht nur in den Fließkanal hineingedrückt, sondern auch herausgezogen werden kann.

Weitere Einzelheiten der Erfindung ergeben sich aus der nachfolgenden Beschreibung anhand der Zeichnung. Es zeigt:
- Fig. 1: eine Vorrichtung im Inneren eines Fließkanals in teilweise geschnittener Darstellung,
- Fig. 2: den Schnitt A-A aus Fig. 1,
- Fig. 3: eine andere konstruktive Lösung der Vorrichtung, bei der das Blechpaket in einen separaten Rahmen eingeschweißt ist,
- Fig. 4: eine weitere konstruktive Lösung der Vorrichtung mit einer Zug- und Druckanbindung der Stellschrauben,
- Fig. 5: einen Schnitt durch eine Lösungsvariante der Vorrichtung, die sich am Ende eines Fließkanals befindet,
- Fig. 6: ein anderes Beispiel einer Verstelleinrichtung in Schnittdarstellung, die eine Verstellung der Wand auf Zug und Druck erlaubt,
- Fig. 7: einen erfindungsgemäßen Ausschnitt aus einem Werkzeug, bei dem beide Werkzeugwände mit einer Verstelleinrichtung versehen sind, die jeweils unabhängige Stellschrauben für eine Gesamtverstellung und für eine Relativverstellung besitzen, und
- Fig. 8: skizziert ein erfindungsgemäßes Verfahren zum gesteuerten bzw. geregelten Austragen einer Massebahn mit veränderlicher Ceometrie.

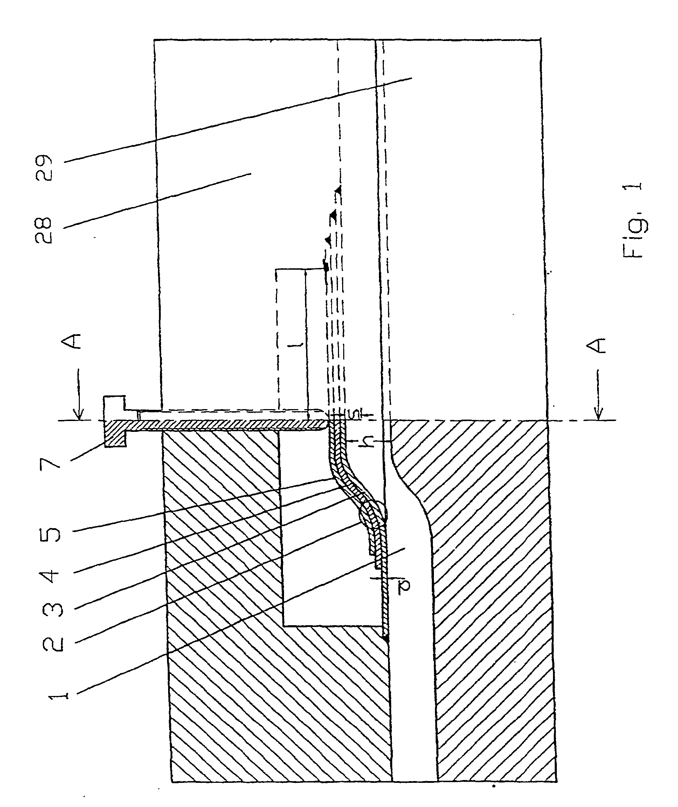

Wie Fig. 1 erkennen läßt, befindet sich die Einrichtung zur veränderlichen Begrenzung eines flachen Fließkanals innerhalb eines Werzeugs, das aus einer oberen (28) und einer unteren Werkzeughälfte (29) besteht. Der Fließkanal (1) besitzt mindestens eine Wand, die aus einem Paket (2) dünner Bnzelbleche (3, 4 und 5) gebildet wird. Das Paket (2) wiederum setzt sich aus einem Fließkanalblech (3), das mit dem Fließkanal eine gemeinsame Wand besitzt, und das aus Gründen der Dichtheit gegenüber dem im Fließkanal strömenden Medium ringsum fest in die Werkzeughälfte (28) eingeschweißt ist, sowie mindestens einem Stützblech (4), zusammen. Prinzipiell können für das Fließkanalblech (3) auch andere Verbindungsmethoden mit der Werkzeughälfte (28), der den Fließkanal (1) bildet, benutzt werden, solange diese eine absolute Dichtheit gegenüber dem im Rießkanal (1) strömenden Medium garantieren. Je nach Anwendung können auch beliebig viele weitere Stützbleche (4 und 5) verwendet werden. Die Stützbleche (4 und 5) sind entweder wie in Fig. 1 dargestellt nur an einer Seite mit der Werkzeughälfte (28) verschweißt oder verbunden, sie können aber auch nur auf das Fließkanalblech aufgelegt sein. Über einen Kraft- oder Formschluß sollte jedoch sichergestellt sein, daß zumindest an einem Punkt oder auf einer Linie keine Relativbewegungen der Einzelbleche (3 - 5) untereinander auftreten können, um die generelle Lage der Einzelbleche zueinander sicherzustellen. Um den bei der Deformation erforderlichen Längenausgleich der Einzelbleche (3 - 5) untereinander zuzulassen, sollten sich die Oberflächen der Einzelbleche (3 - 5) jedoch zumindest bereichsweise relativ zueinander verschieben lassen. Die Einzelbleche (3 - 5) können aus metallischen Werkstoffen bestehen, hier insbesondere aus elastischen Federstählen, sie können aber auch aus anderen Werkstoffen, wie zum Beispiel aus Kunststoffen sein. Sie müssen auch nicht alle aus dem gleichen Werkstoff bestehen.

Die Blechdicke (d) der Einzelbleche (3 - 5) hängt von dem jeweiligen Einsatzfall und dem gewählten Werkstoff ab. Bei Metallen sollte sie, um eine große Deformation zu ermöglichen, in der Regel kleiner, gleich 2 mm, vorzugsweise jedoch kleiner, gleich 1 mm sein. Die Dicke (d) der Einzelbleche (3 - 5) muß nicht notwendigerweise gleich sein, im Einzelfall kann es von Vorteil sein, abgestufte Blechdicken (d) einzusetzen. Das Blechpaket (2) kann eben sein, es ist jedoch von Vorteil, wenn es wie in Fig. 1 dargestellt, gekrümmt ist, da durch die Krümmung die Bildung von Zugspannungen speziell im fest eingeschweißten Fließkanalblech (3), reduziert werden kann. Auf das Blechpaket (2) wirken von der Rückseite Stellmittel (7) ein, mit denen die Position des Blechpakets verändert werden kann. Die Länge (1) vom Beginn des Blechpakets (2) bis zum Kraftangriffspunkt der Stellmittel (7) sollte möglichst lang sein, um einen großen Stellweg (s) erreichen zu können. Sie sollte mindestens 20 mm betragen, vorzugsweise jedoch größer 30 mm sein.

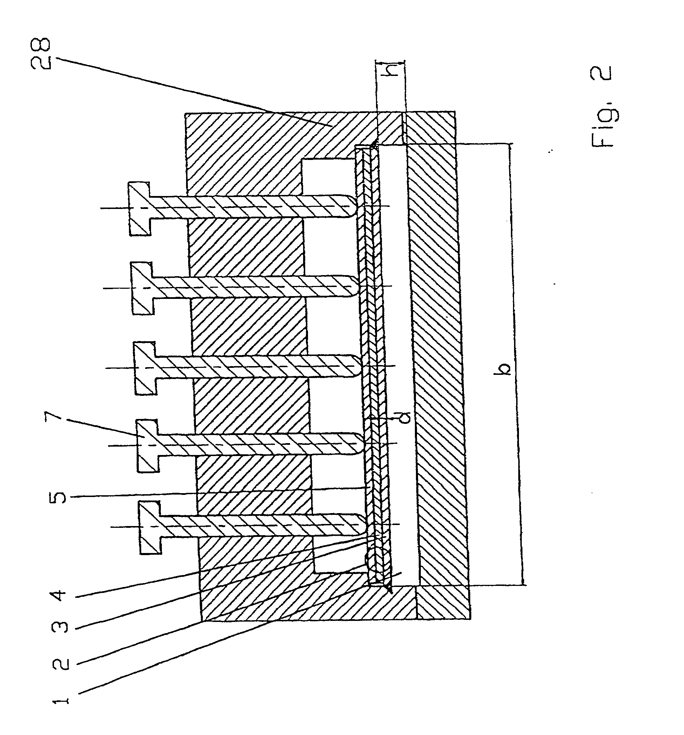

Die Art der einsetzbaren Stellmittel ist vielfältig. Es können im einfachsten Fall, wie in Bild 1 dargestellt, Schrauben sein, es können aber auch Dehnbolzen, Motoren, Piezotranslatoren oder ähnliche Elemente eingesetzt werden. Prinzipiell kann der Stellweg (s) auch über ein Fluid erzeugt werden. Die Vorrichtung ist bereits mit einem Stellmittel funktionsfähig, vorteilhaft ist jedoch die Verwendung mehrerer Stellmittel über der Breite (b) des Kanals, die in definiertem Abstand voneinander positioniert sind, wie dies in Fig. 2 dargestellt ist. Diese Figur zeigt den Querschnitt des Fließkanals (1) entsprechend dem Schnitt A - A aus Fig. 1. Man erkennt darin, daß mehrere Stellschrauben (7), die über ein Gewinde in der oberen Werkzeughälfte (28) eingebunden sind, von oben auf das Blechpaket (2) einwirken. Fig. 2 zeigt auch, daß die Stützbleche (4 und 5) des Blechpakets (2) seitlich nicht mit der Werkzeughälfte (28) verbunden sind. Unter einem flachen Fließkanal sei ein Fließkanal mit einem Verhältnis der Fließkanalbreite (b) zu der Fließkanalhöhe (h) von mindesten 10 verstanden. Der Fließkanal kann auch rund sein. In diesem Fall wird zur Ermittlung des Verhältnisses statt der Fließkanalbreite der mittlere Fließkanalumfang herangezogen.

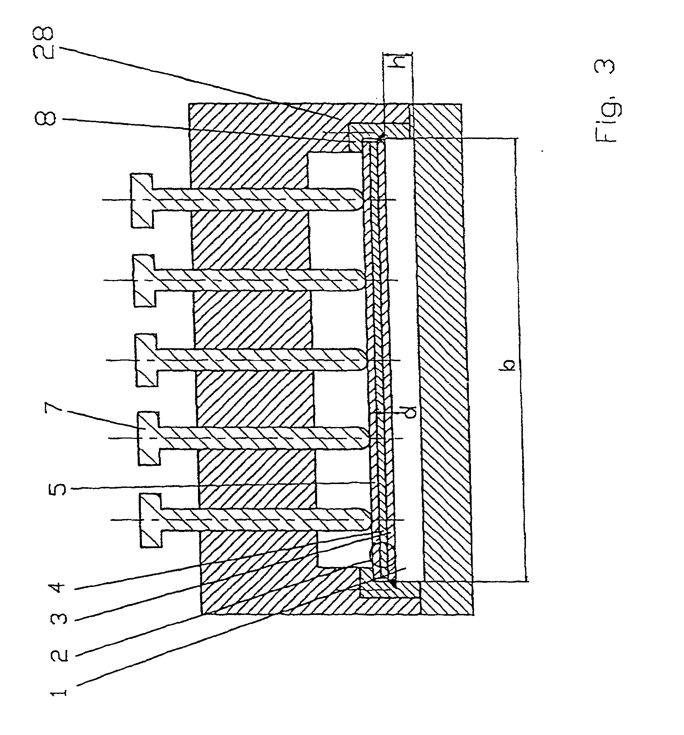

Fig. 3 zeigt eine andere Form der Integration des Blechpakets (2) in die Werkzeughälfte (28). Dabei ist das Blechpaket (2), auf das die Stellschrauben (7) zur Verstellung der Geometrie des Fließkanals (1) von oben einwirken, in einen separaten Rahmen (8) eingeschweißt, der dann in die Werkzeughälfte (28) eingeschraubt ist. Diese Lösung hat den Vorteil, daß das Blechpaket (2) mit geringem Aufwand ausgetauscht werden kann.

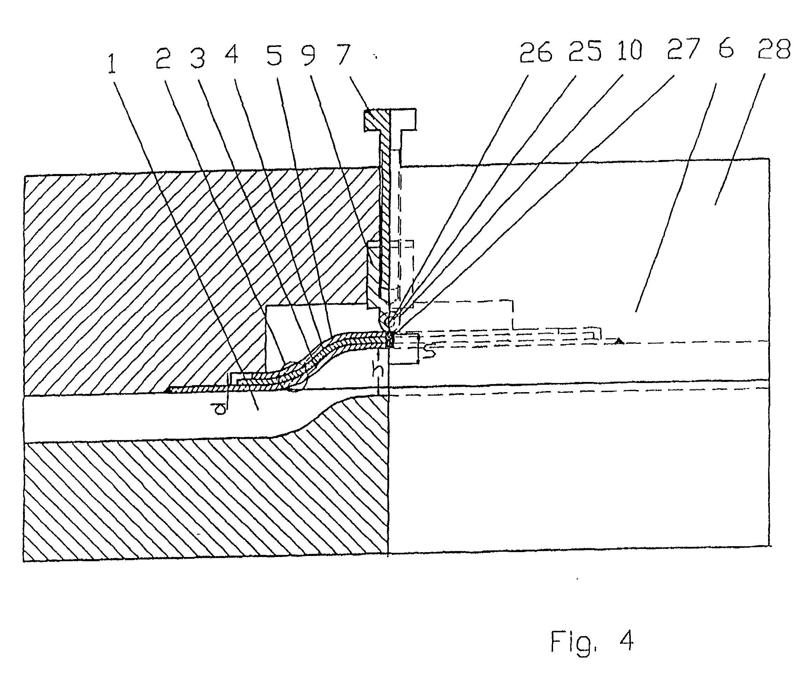

Fig. 4 zeigt die Vorrichtung aus Fig. 1 mit einem nochmals vergrößerten Stellbereich. In diesem Fall ist das Blechpaket (2) mittels eines angeschweißten partiell geschlitzten Rohres (10) formschlüssig mit den Gewindehülsen (9) verbunden. Der Formschluß wird hergestellt indem ein Rundstab (26) durch das im unteren Bereich (27) mit dem Blechpaket verschweißte und bis auf die Tiefe des Blechpakets partiell geschlitzte Rohr (10) und durch die in diese Schlitze hineinragenden am Ende der Gewindehülsen (9) befindlichen Ösen (25) gesteckt wird. Durch Drehen der Stellschrauben (7), die sich durch ein Gewinde in der oberen Werkzeughälfte (28) abstützen und in ihrem unteren Bereich in die Gewindehülsen (9) hineinragen, kann nun die Höhe (h) des Fließkanals (1) sowohl vergrößert als auch verkleinert werden. Außerhalb des verschweißung Bereiches (27) können sich die Oberflächen der Einzelbleche (3 - 5) wiederum relativ zueinander bewegen, wodurch die hohe Flexibilität im Blechpaket (2) erhalten bleibt. Bei dieser Lösung werden die Stützbleche (3,4,5) nicht mit der Werkzeughälfte verschweißt. Vorteil der formschlüssigen Anbindung ist, daß man die Fließkanalhöhe (h) nicht nur verringern , sondern auch vergrößern kann. Weiterhin ist man nicht auf die elastische Rückstellung des Blechpakets angewiesen, so daß der mögliche Stellweg (s) nochmals größer sein kann. Bei flächenmäßig groß dimensionierten Blechpaketen sind mit dieser Konstruktion Stellwege (s) im Bereich größer 20 mm erreichbar.

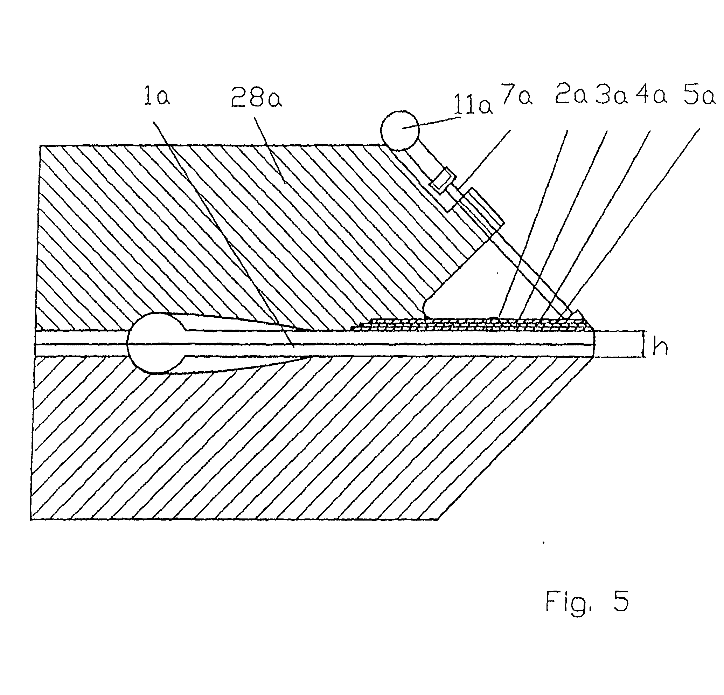

Zur eindeutigen Identifikation sind ab Fig. 5 Positionen mit gleicher Funktion auch mit der gleichen Ziffer unter Zusatz eines für jede Zeichnung eigenen Buchstabens gekennzeichnet. Fig. 5 zeigt einen Schnitt durch eine Lösungsvariante einer Verstelleinrichtung nach der Erfindung, die sich am Ende eines Fließkanals befindet. Dabei bildet das Ende des Blechpakets (2a) gleichzeitig das Ende des Fließkanals (1a). Die Stellschrauben (7a), die in einem Gewinde in der Werkzeugoberhälfte (28a) sitzen, wirken wiederum von oben auf das Blechpaket (2a) mit den Einzelblechen (3a, 4a, und 5a) ein. Durch manuelles Drehen oder durch Drehen mittels eines Stellmotors (11a) kann somit die Höhe (h) des Fließkanals (1a) verringert werden.

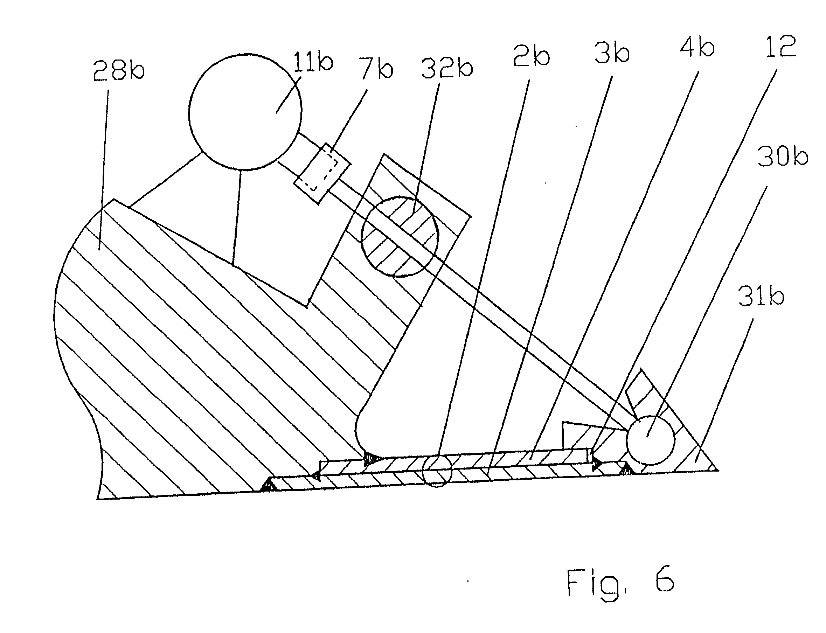

Die Fig. 6 zeigt in Schnittdarstellung eine andere Einrichtung zur Verstellung der Position des Blechpakets (2b). Auf Grund der formschlüssigen Anbindung der Stellschrauben (7b) die mit dem Fließkanalblech (3b) verschweißte Profilleiste (31 b) kann die Lage des Blechpakets (2b) mittels Zug oder Druck in seiner Lage verändert werden. Dazu sind auf die Enden der Stellschrauben (7b) Kugeln (30b) angeschweißt, die in einer Bohrung einer mit dem Blechpaket (2b) verschweißten Profilleiste (31b) sitzen. Die Stellschrauben (7b) sind über ein Gewinde, das sich in einem Zylinderstück (32b) befindet, verbunden. Das Zylinderstück (32b) sitzt seinerseits in einer Bohrung des Werzugoberteils (28b). Durch Drehen der Stellschrauben von Hand oder mittels eines Stellmotors (11b) kann das Blechpaket (2b) nun hochgezogen oder heruntergedrückt werden. Das Deckblech (4b) ist nicht mit der Profilleiste (31b) verschweißt. Es liegt in einer Nut, die sich zwischen der Profilleiste (31b) und dem Fließkanalblech (3b) befindet. Am Ende dieser Nut bleibt zwischen dem Deckblech (4b) und der Profilleiste (31b) ein Spalt (12) um die Flexibilität des Blechpakets (2b) zu erhalten.

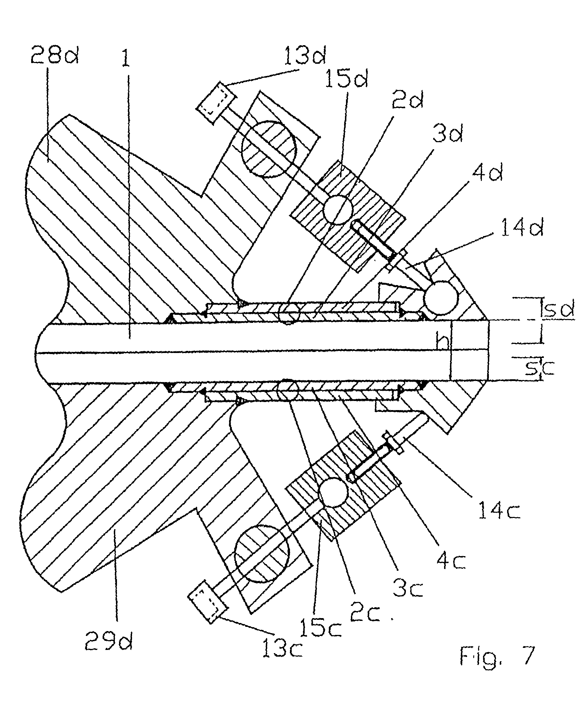

Fig. 7 zeigt in Schnittdarstellung ein Beispiel für ein Werkzeug mit zwei gegenüberliegend angeordneten verstellbaren Wänden. Bei dieser Lösung wirken auf die Blechpakete (2c,d) jeweils zwei unabhängige Stellmittel (13c,d und 14c,d), wobei die Stellmittel (13c,d) jeweils nur aus zwei Stellschrauben bestehen, die an den beiden Rändern des Werkzeugs positioniert sind. Mit ihrer Hilfe können die Verstellbalken (15c,d) in ihrer Gesamtheit verschoben werden, das heißt, auch die Blechpakete (2c,d) über ihre vollen Breiten verbogen werden. Zwischen den Verstellbalken (15c,d) und den Blechpaketen (2c,d) sind nochmals eine Vielzahl von Stellmitteln (14c,d) über der Breite der Vorrichtung angeordnet, mit denen die Blechpakete (2c,d) zusätzlich an definierten Stellen lokal begrenzt verschoben werden können. Die Lösung c erlaubt von der Neutralstellung des Blechpakets (2c) aus betrachtet nur eine Verringerung der Fließkanalhöhe (h) um den Stellweg (sc). Sie funktioniert wiederum nur solange, wie eine vollständige elastische Rückstellung des Blechpakets (2c) garantiert ist. Allerdings bietet sie ein Höchstmaß an Verstellkomfort und Bedienungsfreundlichkeit, da Gesamt- und Relativeinstellung entkoppelt sind und erlaubt unter Beibehaltung der Relatiwerstellung die Fließkanalhöhe (h) insgesamt zu verstellen, was in der Praxis häufig gewünscht ist. Diese Lösung ist prinzipiell auch statt mit einem Blechpaket mit einer massiven Fließkanalwand ausführbar. Das Blechpaket sorgt dabei lediglich für einen nochmals vergrößerten Verstellbereich. Die Konstruktion kann wiederum entweder nur in eine Fließkanalwand oder auch in zwei Fließkanalwände integriert werden. Das Gleiche gilt auch für die Ausführung d, bei der die Stellmittel (13d und 14d) jeweils formschlüssig an den Verstellbalken (15d) bzw. an das Blechpaket (2d) angeschlossen sind. Diese Lösung bietet das Maximum an Verstellmöglichkeit, wenn sie in zwei Fließkanalwände integriert ist, da sie wie bereits für Fig. 6 erläutert auch die Möglichkeit bietet, mit den Stellschrauben (13d und 14d) die Fließkanalhöhe (h) zu vergrößern. Der erreichbare Verstellweg (sd) beträgt dabei mehr als das zweifache des Verstellwegs (sc), da bei dieser Konstruktion das Blechpaket (2d) auch in geringem Maß plastisch deformiert werden kann. Es sind Stellwege von größer 10 mm realisierbar.

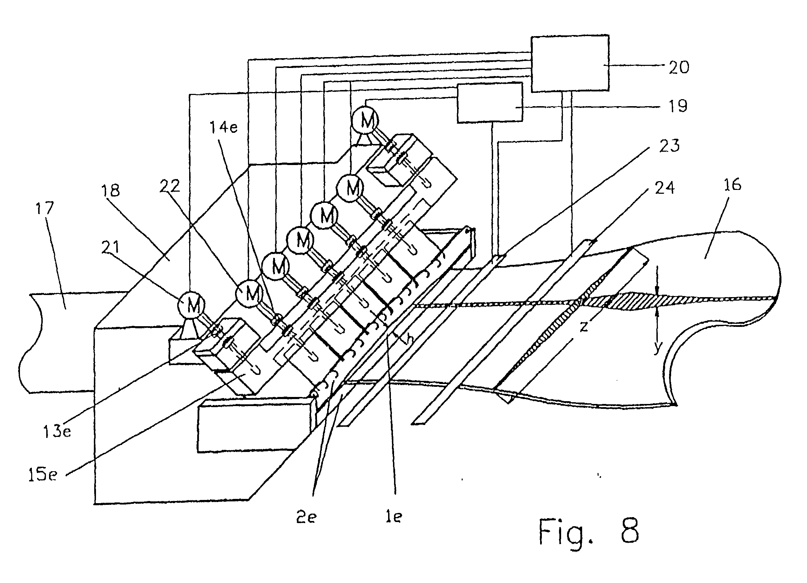

Fig. 8 skizziert ein Verfahren zum Austragen einer Massebahn mit veränderlicher Geometrie. Durch den mit den beschriebenen Vorrichtungen erreichbaren erheblich vergrößerten Stellweg und durch die Integration von zwei unabhängigen jeweils formschlüssig angebundenen Stellmitteln (13e und 14e), die auf mindestens eine flexible Wand (2e) eines Fließkanals (1e) wirken, ergeben sich neue verfahrenstechnische Möglichkeiten. Die Skizze zeigt beispielhaft ein erfindungsgemäßes Verfahren zum Austragen einer Massebahn (16), wobei die Dicke (y) und die Breite (z) der Massebahn (16) während des Austrags verändert werden können. Dabei wird die Masse mittels eines Extruders (17) mit Druck durch ein Werkzeug (18) gefördert. In dem Werkzeug (18) befindet sich der Fließkanal (1e) mit der flexiblen Wand (2e), die über unabhängige Stellmittel (13e und 14e) in ihrer Lage verändert werden kann. Der Fließkanal (1e) kann natürlich auch eine andere geometrische Form haben. So kann er zum Beispiel auch rund sein. Über die Stellmittel (13e), die auf den Verstellbalken (15e) wirken, kann man nun während des Masseaustrags die Höhe (h) des Austrittsspalts über der gesamten Breite gleichmäßig vergrößern oder verkleinern. Der Stellbereich sollte größer 8 mm vorzugsweise jedoch größer als 12 mm sein. Mittels der Stellmittel (14e), die in den Verstellbalken (15e) integriert sind, kann die Wand (2e) zusätzlich lokal an bestimmten Stellen über der Breite um die mittels der Stellmittel (13e) eingestellte Position herum verstellt werden. In diesem Fall sollte ein Verstellbereich von größer 2 mm vorzugsweise jedoch größer als 4 mm vorhanden sein.

Beide Verstellungen können prinzipiell manuell vorgenommen werden. In aller Regel ist es aber sinnvoll, diese Verstellung über ein Steuer- beziehungsweise über ein Regelgerät (19 bzw. 20) vorzunehmen. Dazu ist jedes einzelne Stellmittel mit einem ansteuerbaren Stellantrieb (21 bzw. 22) verbunden. Für den geregelten Betrieb muß natürlich noch die Dicke (y) und die Breite (z) der Massebahn (16) kontinuierlich erfaßt werden. Die Dicke (y) wird dabei während des Masseaustrags mit einem Dickenmeßsystem (23) und die Breite (z) mit einem Breitenmeßsystem (24) erfaßt und an den Regler übertragen, der dann einen Soll-Ist Vergleich durchführt, die neuen Stellgrößen ermittelt und an die Stellantriebe (21 bzw. 22) weitergibt. In Fällen, wo es auf extrem große Stellwege ankommt, ist es vortelhaft beide Wände (2e) des Fließkanals (1e) flexibel zu gestalten und mit Stellmitteln (13) sowie mit Steuer- bzw. Regelgeräten (19 bzw. 20) auszustatten. Dies empfiehlt sich besonders dann, wenn während des Masseaustrags auch gleichzeitig die Breite (z) der Massebahn (16) verändert werden soll. Das Verfahren kann zum Beispiel eingesetzt werden, um Preßwerkzeuge mit komplexer Geometrie mit Schmelze zu füllen, wobei das Preßwerkzeug und das Austragswerkzeug sich relativ zueinander bewegen. Im Bereich des Extrusionsblasformens kann das Verfahren eingesetzt werden, um während des Schlauchaustragsvorgangs neben der bekannten zeitabhängigen Profilierung des Vorformlings in Extrusionsrichtung auch eine zeitabhängige Profilierung des Vorformlings in Umfangsrichtung vorzunehmen. Damit kann die im Blasteil entstehende Dickenverteilung in erheblich verbessertem Maß positiv beeinflußt werden.

## Patentansprüche

1. Vorrichtung zur veränderlichen Begrenzung eines flachen Fließkanals (1) mit einem Verhältnis von Fließkanalbreite b bzw. Fließkanalumfang zu Fließkanalhöhe h von größer 10, wobei erste Stellmittel (13c, 13d) vorgesehen sind, die auf Wände (2c, 2d) der Vorrichtung wirken, dadurch gekennzeichnet, daß zweite Stellmittel (14c, 14d) vorgesehen sind, die unabhängig von den ersten Stellmitteln (13c, 13d) auf die Wände (2c, 2d) einwirken, und daß mittels der ersten Stellmittel (13c, 13d) eine gleichmäßige Verstellung der Wände (2c, 2d) über die gesamte Breite vorgenommen werden kann, und mittels der zweiten Stellmittel (14c, 14d) die Wände (2c, 2d) zusätzlich über die Breite b lokal begrenzt deformiert werden können.

2. Vorrichtung nach Anspruch 1, dadurch gekennzeichnet, daß auf zwei Wände (2c, 2d) des Fließkanals (1) jeweils unabhängige erste Stellmittel (13c, 13d) und zweite Stellmittel (14c, 14d) einwirken, wobei mittels der ersten Stellmittel (13c, 13d) eine Verstellung der Wände (2c, 2d) über die gesamte Breite erfolgt, und mittels der zweiten Stellmittel (14c, 14d) die Wände (2c, 2d) über die Breite lokal deformierbar sind.

3. Vorrichtung nach Anspruch 2, dadurch gekennzeichnet daß ein Teil der zweiten Stellmittel (14d) kraftschlüssig mit einer flexiblen Wand (2d) verbunden ist, so daß diese Wand (2d) zurückziehbar ist.

4. Verfahren zum Austragen einer Massebahn (16), bei dem die Masse mittels eines Speiseaggregats (17), zum Beispiel eines Extruders, unter Druck durch ein mit einem flachen Fließkanal versehenes Werkzeug (18) gefördert wird und bei dem die Masse das Werkzeug (18) über einen Austrittsspalt, der mindestens eine verstellbare Wand (2e) aufweist, verläßt, wobei während des Masseaustrags durch bereichsweise Veränderung der Position der Wand (2e), mittels eines ersten Stellsystems (13e) die Höhe h des Fließkanals (1e) in seiner Gesamtheit verstellt wird, dadurch gekennzeichnet, daß ebenfalls während des Masseaustrags über ein zweites vom ersten Stellsystem (13e) unabhängiges Stellsystem (14e) die Höhe h über die Breite des Fließkanals (1e) bereichsweise verstellt wird, so daß sich insgesamt über die Dauer des Austrags die Dicke y der Massebahn (16) entweder in ihrer Gesamtheit oder nur an lokal bestimmten Stellen ändert.

5. Verfahren nach Anspruch 4, dadurch gekennzeichnet, daß die Höhe h des Fließkanals (1e) während des Masseaustrags in mindestens einem Randbereich des Werkzeugs (18) bis auf 0 mm geschlossen wird, so daß sich die Breite z der Massebahn (16) während des Austrags zeitlich ändert.

6. Verfahren nach einem der Ansprüche 4 oder 5, dadurch gekennzeichnet, daß die Höhe h des Fließkanals (1e) bereichsweise um die jeweilige vom ersten Stellsystem (13e) eingestellte Mittellage herum um mehr als 2 mm verstellt wird.

7. Verfahren nach einem der Ansprüche 4 bis 6, dadurch ekennzeichnet, daß die Fließkanalhöhe h über der Breite des Fließkanals (1e) mittels mindestens zweier voneinander unabhängiger Stellsysteme (13e) und (14e), die auf die gleiche Fließkanalwand (2e) wirken, über Steuer- bzw. über Regelgeräte (19 bzw. 20) nach vorgegebenen Algorithmen gesteuert oder geregelt wird.

## Claims

1. Device for the variable limitation of a flat flow channel (1) with a ratio of flow channel width b or flow channel periphery to flow channel height h of greater than 10, first adjusting means (13c, 13d) being provided which act on the walls (2c, 2d) of the device, characterised in that second adjusting means (14c, 14d) are provided which act on the walls (2c, 2d) independently of the first adjusting means (13c, 13d), and in that a uniform adjustment of the walls (2c, 2d) can be made over the entire width by means of the first adjusting means (13c, 13d) and the walls (2c, 2d) can additionally be deformed locally and in a limited manner over the width b by means of the second adjusting means (14c, 14d).

2. Device according to claim 1, characterised in that first adjusting means (13c, 13d) and second adjusting means (14c, 14d), independently in each case, act on two walls (2c, 2d) of the flow channel (1), wherein an adjustment of the walls (2c, 2d) is made over the entire width by means of the first adjusting means (13c, 13d) and the walls (2c, 2d) can be locally deformed over the width by means of the second adjusting means (14c, 14d).

3. Device according to claim 2, characterised in that a portion of the second adjusting means (14d) is connected to a flexible wall (2d) with non-positive fit, so this wall (2d) can be pulled back.

4. Process for discharging a web of compound (16) in which the compound is conveyed by means of a feed unit (17), for example an extruder, under pressure through a tool (18) provided with a flat flow channel and in which the compound leaves the tool (18) via an outlet gap which has at least one adjustable wall (2e), the height h of the flow channel (1e) being adjusted in its entirety during discharge of the compound by changing the position of the wall (2e) in places by means of a first adjusting system (13e), characterised in that, also during the discharge of the compound, the height h is adjusted in places over the width of the flow channel (1e) by means of a second adjusting system (14e) independent of the first adjusting system (13e), so for the duration of the discharge as a whole, the thickness y of the compound web (16) changes either in its entirety or only at locally specified points.

5. Process according to claim 4, characterised in that the height h of the flow channel (1e) is closed down to 0 mm in at least one edge region of the tool (18) during discharge of the compound, so the width z of the compound web (16) changes over time during the discharge.

6. Process according to one of claims 4 or 5, characterised in that the height h of the flow channel (1e) is adjusted by more than 2 mm in places round the respective central position adjusted by the first adjusting system (13e).

7. Process according to one of claims 4 to 6, characterised in that the flow channel height h is controlled or regulated over the width of the flow channel (1e) by means of at least two adjusting systems (13e) and (14c) which are independent of one another and which act on the same flow channel wall (2e) via control or regulating units (19 and 20) and according to predetermined algorithms.

## Revendications

1. Dispositif de délimitation variable d'un canal d'écoulement plat (1) qui présente un rapport entre la largeur b du canal d'écoulement, ou respectivement la circonférence du canal d'écoulement, et la hauteur h du canal d'écoulement supérieur à 10, dans lequel sont prévus des moyens de réglage (13c, 13d) qui agissent sur des parois (2c, 2d) du dispositif, caractérisé en ce qu'il est prévu des deuxièmes moyens de réglage (14c, 14d) qui agissent sur les parois (2c, 2d) indépendamment des premiers moyens de réglage (13c, 13d), et en ce qu'à l'aide des premiers moyens de réglage (16c, 13d) on peut procéder à un réglage régulier des parois (2c, 2d) sur la totalité de la largeur, et en ce qu'à l'aide des deuxièmes moyens de. réglage (14c, 14d) on peut additionnellement déformer les parois (2c, 2d) de manière localement limitée sur la largeur b.

2. Dispositif selon la revendication 1, caractérisé en ce que des premiers moyens de réglage (13c, 13d) et des deuxièmes moyens de réglage (14c, 14d) respectivement indépendants agissent sur deux parois (2c, 2d) du canal d'écoulement (1), et en ce qu'à l'aide des premiers moyens de réglage (13c, 13d) on peut procéder à un réglage des parois (2c, 2d) sur la totalité de la largeur, et en ce qu'à l'aide des deuxièmes moyens de réglage (14c, 14d) on peut déformer localement les parois (2c, 2d) sur la largeur.

3. Dispositif selon la revendication 2, caractérisé en ce qu'une partie des deuxièmes moyens de réglage (14d) est reliée à coopération de forces à une paroi flexible (2d) de telle façon que cette paroi (2d) peut être tirée en retrait.

4. Procédé pour chasser une nappe de matière (16), dans lequel la masse est alimentée au moyen d'un groupe d'alimentation (17), par exemple d'une extrudeuse, sous pression à travers un outil (18) pourvu d'un canal d'écoulement plat, et dans lequel la masse sort de l'outil (18) via une fente de sortie qui présente au moins une paroi réglable (2e), et pendant la sortie de la masse, on fait varier la hauteur h du canal d'écoulement (1e) dans sa totalité par modification locale de la position de la paroi (2e) au moyen d'un premier système de réglage (13e), caractérisé en ce que pendant la sortie de la masse on modifie également localement la hauteur h sur la largeur du canal d'écoulement (1e) au moyen d'un deuxième système de réglage (14e) indépendant du premier système de réglage (13e), de sorte qu'au total sur la durée de la sortie l'épaisseur y de la nappe de matière (16) varie soit dans son ensemble soit uniquement à des emplacements localement déterminés.

5. Procédé selon la revendication 4, caractérisé en ce que la hauteur h du canal d'écoulement (1e) pendant la sortie de la masse est fermée jusqu'à 0 mm au moins dans une région de bordure de l'outil (18), de sorte que la largeur z de la nappe de matière (16) varie temporellement pendant la sortie.

6. Procédé selon l'une des revendications 4 et 5, caractérisé en ce que la hauteur (h) du canal d'écoulement (1e) est modifiée localement sur plus de 2 mm autour de la position moyenne respective réglée par le premier système de réglage (13e).

7. Procédé selon l'une des revendications 4 à 6, caractérisé en ce que la hauteur h du canal d'écoulement est commandée ou régulée sur la largeur du canal d'écoulement (1e) selon des algorithmes prédéterminés au moyen de deux systèmes de réglage (13e et 14e) indépendants l'un de l'autre qui agissent sur la même paroi (2e) du canal d'écoulement, via des appareils de commande ou de régulation (19, respectivement 20).
